# EUROPÄISCHE PATENTSCHRIFT

(11) **EP 3 137 410 B1**
(45) Veröffentlichungstag und Bekanntmachung des Hinweises auf die Patenterteilung: **22.03.2023**
(21) Anmeldenummer: 15715730.6
(22) Anmeldetag: 13.04.2015
(51) Int. Cl.: B67C 3/24, B67B 3/28, B29C 49/42, B65G 47/84

(54) **BEHÄLTERBEHANDLUNGSMASCHINE SOWIE VERFAHREN ZUM BEHANDELN VON BEHÄLTERN**
CONTAINER-PROCESSING MACHINE AND METHOD FOR PROCESSING CONTAINERS
MACHINE ET PROCÉDÉ DE TRAITEMENT DE RÉCIPIENTS

(30) Priorität: 29.04.2014 DE 102014105974
(43) Veröffentlichungstag der Anmeldung: 08.03.2017
(73) Patentinhaber: KHS GmbH, 44143 Dortmund (DE)
(72) Erfinder: SEEWALD-RAIDER, Alex, 55543 Bad Kreuznach (DE)
(86) Internationale Anmeldenummer: PCT/EP2015/057940
(87) Internationale Veröffentlichungsnummer: WO 2015/165721

(56) Entgegenhaltungen:
- EP-A1- 1 182 165
- EP-A1- 2 792 634
- DE-A1-102011 088 588
- DE-B3-102011 111 496
- Anonymous: "Linear motor - Wikipedia, the free encyclopedia", , 25 August 2013 (2013-08-25), XP055204371, wikipedia Retrieved from the Internet: URL:https://en.wikipedia.org/w/index.php?t itle=Linear_motor&oldid=570183942 [retrieved on 2015-07-23]
- Anonymous: "Linear actuator - Wikipedia", , 11 March 2014 (2014-03-11), XP055788588, Retrieved from the Internet: URL:https://en.wikipedia.org/w/index.php?t itle=Linear_actuator&oldid=599127407#Linea r_motors [retrieved on 2021-03-22]

## Beschreibung

Die Erfindung bezieht sich auf eine Behälterbehandlungsmaschine gemäß dem Oberbegriff des Patentanspruchs 1 sowie auf ein Verfahren zum Behandeln von Behältern gemäß dem Oberbegriff des Patentanspruchs 16. Behälterbehandlungsmaschinen, insbesondere solche umlaufender Bauart, bei denen ein um eine vertikale Maschinenachse rotierend angetriebenes Transportelement mit einer Vielzahl von umfangsseitig am Transportelement verteilten Behandlungsstationen vorgesehen ist, sind hinlänglich bekannt. Bei derartigen Behälterbehandlungsmaschinen, insbesondere bei Füllmaschinen bzw. Verschließern wird der zu behandelnde Behälter nach der Behälterzuführung von einer Zuführposition in eine Behandlungsposition angehoben, d.h. in vertikaler Richtung verfahren und dabei an ein Behandlungselement der Behandlungsstation, beispielsweise ein Füllelement oder einen Verschließkopf herangeführt. Das Anheben bzw. Absenken der zu behandelnden Behälter erfolgt hierbei beispielsweise über eine Kurvensteuerung, d.h. die Behälterbehandlungsmaschine weist eine Steuerkurve auf, mittels der den jeweiligen Behandlungsstationen zugeordnete Hubeinrichtungen in vertikaler Richtung bewegt werden.

Nachteilig dabei ist, dass eine Kurvensteuerung einen erheblichen Bauraum an der Behälterbehandlungsmaschine einnimmt und damit die Komplexität der Behälterbehandlungsmaschine wesentlich erhöht. Ein weiterer Nachteil besteht darin, dass die Steuerung der Hubbewegung durch die Kurvensteuerung fest vorgegeben ist, so dass nachträgliche Änderungen des Bewegungsablaufs der Hubbewegung nicht möglich sind.

Aus der Druckschrift DE 10 2011 088 588 A1 ist eine Rotationsmaschine zum Verschließen oder Füllen von Behältern bekannt geworden, bei der die Behälter durch einen elektrischen Linearantrieb in eine Behandlungsposition bewegt werden.

Die Druckschrift EP 1 182 165 A1 offenbart eine Behandlungsmaschine gemäß dem Oberbegriff des Anspruchs 1, umfassend einen mittels eines Linearmotors verschiebbar geführten Behälterträger.

Ausgehend hiervon ist es Aufgabe der Erfindung, eine Behälterbehandlungsmaschine anzugeben, die einen vereinfachten Aufbau bei einer gleichzeitig verbesserten Steuerbarkeit der Hubbewegung der Hubeinrichtungen ermöglicht.

Die Aufgabe wird ausgehend vom Oberbegriff des unabhängigen Patentanspruchs 1 durch dessen kennzeichnende Merkmale gelöst. Ein Verfahren zum Behandeln von Behältern ist Gegenstand des nebengeordneten Patentanspruchs 16.

Gemäß einem ersten Aspekt bezieht sich die Erfindung auf eine Behälterbehandlungsmaschine. Die Behälterbehandlungsmaschine umfasst ein umlaufend angetriebenes Transportelement, an dem eine Vielzahl von Behandlungsstationen vorgesehen sind. Die Behandlungsstationen weisen jeweils eine Hubeinrichtung zum Anheben und Absenken des zu behandelnden Behälters auf. Die Hubeinrichtung umfasst dabei zumindest einen Behälterträger und ein Führungselement, an dem der Behälterträger vorzugsweise gleitend geführt ist. Im Inneren des Führungselements ist ein Aufnahmeraum ausgebildet, wobei in diesem Aufnahmeraum des Führungselements mehrere Magnete aufgenommen sind. Das Führungselement kann beispielsweise rohrartig ausgebildet sein. Der Aufnahmeraun kann dabei durch eine Längsbohrung gebildet sein, deren Längsachse mit der Längsachse des Führungselements zusammenfällt. Ferner weist der Behälterträger elektrische Spulen auf, die zusammen mit den Magneten im Führungselement einen Linearantrieb zum Anheben und Absenken des Behälterträgers bilden. Die elektrischen Spulen können dabei mit einem elektrischen Strom beaufschlagt werden, der zur Bewegung des Behälterträgers eine zeitlich sich ändernde Fließrichtung aufweist. Das von den elektrischen Spulen erzeugte Magnetfeld bewirk im Zusammenwirken mit den im Führungselement vorgesehenen Magneten eine Kraft, die ein Verfahren des Behälterträgers am Führungselement hervorruft. Der wesentliche Vorteil der erfindungsgemäßen Behälterbehandlungsmaschine besteht darin, dass der Aufbau der Behälterbehandlungsmaschine wesentlich vereinfacht und der Wartungs- und Reinigungsaufwand wesentlich verringert wird. Durch die Verwendung von Linearantrieben zum Anheben bzw. Absenken des Behälterträgers kann auf eine aufwändige Kurvensteuerung verzichtet werden. Zudem bietet die erfindungsgemäße Behälterbehandlungsmaschine die Möglichkeit einer vereinfachten Formatumstellung, da die formatabhängige Hubbewegung lediglich durch eine veränderte Ansteuerung der Linearantriebe bewirkt werden kann.

Gemäß einem Ausführungsbeispiel weist der Behälterträger einen Führungsabschnitt auf, der zur Bewirkung einer axialen Führung des Behälterträgers am Führungselement dieses Führungselement zumindest abschnittsweise umgibt. Beispielsweise weist der Führungsabschnitt eine Öffnung auf, die in Bezug auf die Querschnittsform bzw. Querschnittsgröße an den Querschnitt des Führungselements angepasst ist. Insbesondere ist der Führungsabschnitt des Behälterträgers derart an das Führungselement angepasst, dass eine gleitende Führung des Behälterträgers am Führungselement erreicht wird. Dadurch kann eine exakte Führung des Behälterträgers am Führungselement erreicht werden.

In einem weiteren bevorzugten Ausführungsbeispiel ist das Führungselement feststehend am Transportelement angeordnet. Diese Fixierung des Führungselements am Transportelement kann beispielsweise durch eine oberseitige und/oder unterseitige Verbindung des freien Endes des Führungselements mit einem Element oder Abschnitt des Transportelements erreicht werden. Dadurch wird eine starre Halterung des Führungselements am Transportelement erreicht.

Bevorzugt weist das Führungselement einen runden oder polygonförmigen Querschnitt auf oder ist als Zahnwelle ausgebildet. Beispielsweise kann das Führungselement rohrförmig ausgebildet sein, wobei der Querschnitt des Führungselements eine runde, insbesondere kreisrunde, ovale, dreieckige, viereckige oder polygonartige Form aufweist. Bei einer Abweichung von der kreisrunden Form wird vorteilhaft erreicht, dass eine Verdrehung des Behälterträgers am Führungselement um dessen Längsachse durch ein formschlüssiges Umschließen des Führungselements durch den Behälterträger vermieden werden kann.

In einem Ausführungsbeispiel ist am Behälterträger eine Verdrehsicherung vorgesehen, die ein Verdrehen des Behälterträgers relativ zum Führungselement verhindert. Dadurch wird erreicht, dass sich trotz der Verwendung eines Führungselements mit einem kreisrunden Querschnitt lediglich eine Bewegungsfreiheit des Behälterträgers in vertikaler Richtung ergibt.

Bevorzugt sind die elektrischen Spulen am Führungsabschnitt des Behälterträgers vorgesehen, d.h. die elektrischen Spulen sind am Läufer des Linearantriebs angeordnet. Durch das Vorsehen der elektrischen Spulen am Führungsabschnitt können diese Spulen in unmittelbarer Nähe zum Führungselement platziert werden so dass das Zusammenwirken der elektrischen Spulen mit den im Führungselement vorgesehenen Magneten optimiert ist.

In einem bevorzugten Ausführungsbeispiel sind am Führungsabschnitt des Behälterträgers zumindest ein Magnetfeldsensor und/oder ein Temperatursensor vorgesehen. Mittels des Magnetfeldsensors ist es möglich, dass die aktuelle Position des Behälterträgers am Führungselement bestimmt wird. Beispielsweise liefert der zumindest eine Magnetfeldsensor ein Sinus-Cosinus-Signal, mittels dem eine Positionsbestimmung des Behälterträgers möglich ist. Des Weiteren können mittels den von dem zumindest einen Magnetfeldsensor bereitgestellten Messsignalen eine Überwachung eines Bruchs eines zu behandelnden Behälters bzw. bei Ausbildung der Behälterbehandlungsmaschine als Füllmaschine eine Füllmengenbestimmung des im Behälter abgefüllten Füllguts erreicht werden. Mittels des zumindest einen Temperatursensors kann eine Überwachung der Temperatur der elektrischen Spulen bewirkt werden, so dass beispielsweise Überlastungssituationen bzw. ein Verschleiß der Gleitlagerung erkannt werden können.

Vorzugsweise weist der Führungsabschnitt des Behälterträgers eine Kunststoffschicht auf, die das Führungselement umfangsseitig umgibt und die eine Gleitschicht gegenüber dem Führungselement bildet. Dadurch kann die gleitende Führung des Behälterträgers am Führungselement bzw. die Gleitfähigkeit des Behälterträgers am Führungselement entscheidend verbessert werden.

Bevorzugt umschließt die Kunststoffschicht die elektrischen Spulen und/oder den Magnetfeldsensor und/oder den Temperatursensor. Insbesondere werden diese Komponenten vollständig von einer Kunststoffschicht umschlossen. Durch dieses Einschließen der elektrischen Komponenten in eine Kunststoffschicht wird eine hohe Beständigkeit dieser elektrischen Komponenten gegen Verschmutzung bzw. Feuchtigkeitseinwirkung erreicht.

In einem bevorzugten Ausführungsbeispiel ist eine elektrische Steuereinrichtung vorgesehen, die zur Beaufschlagung der elektrischen Spulen mit elektrischem Strom derart ausgebildet ist, dass eine Hubbewegung des Behälterträgers erreicht wird. Insbesondere ist die elektrische Steuereinrichtung zur Beaufschlagung der elektrischen Spulen mit elektrischem Wechselstrom, d.h. elektrischem Strom, der zeitabhängig seine Fließrichtung ändert ausgebildet. Ferner kann durch die elektrische Steuereinrichtung eine Beaufschlagung der elektrischen Spulen mit Strom derart erfolgen, dass eine exakte Positionierung des Behälterträgers in einer bestimmten Höhenposition am Führungselement erreicht wird. Dies kann insbesondere im Zusammenwirken mit den von dem zumindest einen Magnetfeldsensor bereitgestellten Messsignalen erfolgen. Insbesondere ist der zumindest eine Magnetfeldsensor mit der elektrischen Steuereinrichtung zur Positionserfassung und Positionskorrektur des Behälterträgers verbunden. Hierbei kann jeweils eine elektrische Steuereinrichtung für jede Behandlungsstation oder eine einzige elektrische Steuereinrichtung für alle Behandlungsstationen vorgesehen sein.

Bevorzugt kann durch eine mit dem Magnetfeldsensor gekoppelte Steuereinrichtung eine Erfassung des Anpressdrucks des Behälters an die Behandlungsstation erfolgen. Dabei wird die von den elektrischen Spulen erzeugte Magnetfeldstärke zur Bestimmung des Anpressdrucks ausgewertet. Somit kann auf eine weitere Sensoreinheit zur Erfassung des Anpressdruck des Behälters an der Behandlungsstation verzichtet werden.

Weiterhin bevorzugt ist eine mit dem Magnetfeldsensor gekoppelte Steuereinrichtung zur Erfassung von sprunghaften Belastungsänderungen des Behälterträgers vorgesehen. Derartige sprunghafte Belastungsänderungen können beispielsweise aus einem Bruch eines zu behandelnden Behälters resultieren, so dass ein derartiger Behälterbruch automatisiert und zeitnah erkannt werden kann.

In einem bevorzugten Ausführungsbeispiel ist eine mit dem Magnetfeldsensor gekoppelte Steuereinrichtung vorgesehen, wobei die Steuereinrichtung zur Ermittlung der Masse des Behälters während der Behälterbehandlung ausgebildet ist. Dadurch kann eine Bestimmung des Füllstands eines in den Behälter abgefüllten Füllguts erreicht werden.

Weiterhin kann der am Behälterträger vorgesehene Temperatursensor mit einer Steuereinrichtung zur Erfassung der Temperatur der elektrischen Spulen verbunden sein.

Die Erfindung betrifft des Weiteren ein Verfahren zum Behandeln von Behältern mittels einer Behälterbehandlungsmaschine, die ein umlaufend angetriebenes Transportelement aufweist, an dem eine Vielzahl von Behandlungsstationen vorgesehen sind, wobei die Behälter an den Behandlungsstationen mittels einer Hubeinrichtung angehoben und/oder abgesenkt werden und wobei die Hubeinrichtung zumindest einen Behälterträger und ein Führungselement umfasst, an dem der Behälterträger geführt wird. Dabei ist im Inneren des Führungselements ein Aufnahmeraum ausgebildet, in dem mehrere Magnete aufgenommen sind. Ferner weist der Behälterträger elektrische Spulen auf, mittels denen der Behälterträger im Zusammenwirken mit den Magneten im Führungselement angehoben bzw. abgesenkt wird.

Behälter im Sinne der Erfindung sind beispielsweise Flaschen, Dosen oder ähnliche Behältnisse aus jeglichem dafür geeigneten Material, insbesondere aus Glas, Kunststoff oder Metall.

Behälterbehandlungsmaschine im Sinne der Erfindung sind jegliche Maschinen, mit denen eine Behälterbehandlung vollzogen werden kann, beispielsweise Füllmaschinen, Reinigungsmaschinen, Inspektionsmaschinen, Verschließer oder Maschinen zur Ausstattung der Behälter mit Ausstattungsmerkmalen.

Unter Behälterträger im Sinne der Erfindung werden sämtliche Einrichtungen verstanden, die zur Halterung bzw. zumindest teilweisen Aufnahme von Behältern geeignet sind. Dies können insbesondere Behälterteller sein, auf denen die Behälter während der Behälterbehandlung bodenseitig aufstehen oder aber Behälterhalter, mittels denen eine hängende Halterung der Behälter erreicht wird, beispielsweise Neckringhalter.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft eine erfindungsgemäße Behälterbehandlungsmaschine in einer schematischen Draufsichtdarstellung; und
- Fig. 2: beispielhaft die Behandlungsstation einer Behälterbehandlungsmaschine in einer schematischen Seitenansicht.

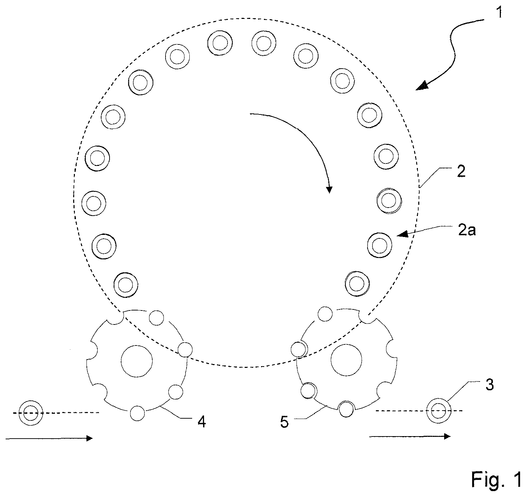

In Figur 1 ist eine erfindungsgemäße Behälterbehandlungsmaschine 1 in einem Ausführungsbeispiel gezeigt. Die Behälterbehandlungsmaschine 1 weist ein um eine vertikale Maschinenachse MA umlaufendes Transportelement 2 auf. An dem Transportelement 2 sind eine Vielzahl von Behandlungsstationen 2a umfangsseitig verteilt angeordnet, an denen die Behandlung der der Behälterbehandlungsmaschine 1 zugeführten Behälter 3 erfolgt. Die Behälterbehandlungsmaschine 1 ist im gezeigten Ausführungsbeispiel eine Füllmaschine mit an den Behandlungsstationen 2a vorgesehenen Füllelementen, so dass die Behälterbehandlung im gezeigten Ausführungsbeispiel eine Füllung dieser Behälter 3 mit einem Füllgut ist. Alternativ kann die Behälterbehandlungsmaschine 1 beispielsweise und nicht abschließend auch eine Verschließmaschine sein. Jede Behandlungsstation 2a umfasst einen Behandlungstisch 2b, der platten- oder tragarmartig ausgeformt ist und mit der Behandlungsstation 2a im bestimmungsgemäßen Betrieb um die Maschinenachse MA umläuft. Alternativ kann den Behandlungsstationen 2a ein gemeinsamer Behandlungstisch 2b zugeordnet sein.

Zur Zuführung von zu behandelnden Behältern 3 ist ein erster Transferstern 4 vorgesehen, der durch ein Zusammenwirken mit einem Transporteur ein Zuführen der Behälter 3 an die Behandlungsstationen 2a bewirkt. Zur Abführung von bereits behandelten Behältern 3 ist ein weiterer Transferstern 5 vorgesehen, mittels dem die bereits behandelten Behälter 3 vom Transportelement 2 abgeführt werden.

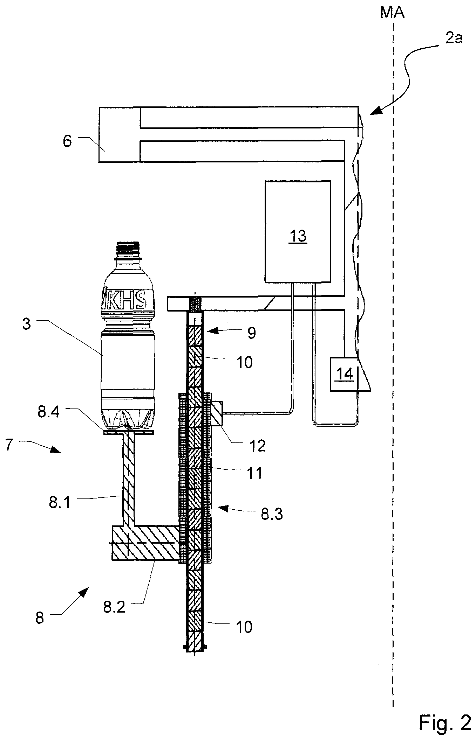

Figur 2 zeigt eine Behandlungsstation 2a in einer detaillierteren Ansicht. Die Behandlungsstation 2a umfasst ein Füllelement 6, das mit einem Füllgutkessel (nicht dargestellt) zum Befüllen den Behälters 3 mit einem flüssigen Füllgut verbunden ist. Die Behandlungsstation 2a umfasst ferner eine Hubeinrichtung 7, mittels der ein Behälter 3 nach der Zuführung über den ersten Transferstern 4 in vertikaler Richtung, d.h. parallel zur Maschinenachse MA angehoben und damit an das Füllelement 6 herangeführt bzw. angedrückt wird. Dies erfolgt vorzugsweise unmittelbar nach der Zuführung. Während der weiteren Drehung des Transportelements 2, bei dem die jeweilige Behandlungsstation 2a vom ersten Transferstern 4 zum zweiten Transferstern 5 bewegt wird, erfolgt die Behandlung des Behälters 3 an der Behandlungsstation 2a. Vor dem Abführen durch den zweiten Transferstern 5 wird der Behälter 3 durch die Hubeinrichtung 7 wieder abgesenkt und dabei beispielsweise aus der Dichtlage am Füllelement 6 gelöst.

Die Hubeinrichtung 7 weist insbesondere einen Behälterträger 8 auf, durch welchen der Behälter 3 während der Behälterbehandlung gehalten ist. Im gezeigten Ausführungsbeispiel wird der Behälterträger 8 durch einen Behälterteller 8.4 gebildet, auf dem der Behälter 3 bodenseitig aufsteht. Alternativ kann der Behälterträger 8 zur hängenden Halterung des Behälters 3 beispielsweise an einem unterhalb der Behältermündung ausgebildeten Behälterflansch ausgebildet sein. Die Behälterträger 8 sind beispielsweise zangenartig ausgebildet und/oder an den Durchmesser angepasst, den der jeweilige Behälter 3 im Bereich eines Neckringes oder Behälterflansch aufweist. Der Behälterträger 8 kann insbesondere zur Halterung der Behälter 3 derart ausgebildet sein, dass sich der Behälter 3 mit seiner Mündung in vertikaler Richtung unterhalb einer Abgabeöffnung des Füllelementes 6 befindet, über die das Füllgut dem Behälter 3 während des Füllens zufließt. Das Füllen des Behälters 3 kann insbesondere im freien Strahl (Freistrahlfüllen), wobei die Behältermündung von der Abgabeöffnung beabstandet ist, oder aber in Dichtlage erfolgen, d.h. der Behälter 3 ist derart an der Abgabeöffnung angepresst, dass sich eine dichte Verbindung zwischen Behältermündung 3 und dem Füllelement 6 ergibt.

Im gezeigten Ausführungsbeispiel ist die Hubeinrichtung 7 als Linearantrieb ausgebildet. Dazu weist die Hubeinrichtung 7 ein Führungselement 9 auf, an dem der Behälterträger 8 in vertikaler Richtung, d.h. parallel zur Maschinenachse MA gleitend geführt ist. Das Führungselement 9 ist hierbei rohrförmig ausgebildet, d.h. weist im Inneren einen vorzugsweise durchgehenden Hohlraum auf, der außenseitig durch eine umfangsseitige Wandung begrenzt ist. Das das Führungselement 9 bildende Rohr kann dabei eine runde, polygone oder zahnradartige Querschnittsform aufweisen. In letzterem Fall ist das Führungselement 9 als Zahnwelle ausgebildet. Das Führungselement 9 kann hierbei an einem freien Ende oder aber an beiden freien Enden am Transportelement 2 gehalten sein. Im gezeigten Ausführungsbeispiel ist das Führungselement 9 an seinem oberen freien Ende gegenüber dem Transportelement 2 fixiert, vorliegend ist das Führungselement 9 an dem Behandlungstisch 2b befestigt.

Der Behälterträger 8 ist im gezeigten Ausführungsbeispiel mehrfach gewinkelt ausgebildet und weist einen ersten Behälterträgerabschnitt 8.1, einen zweiten Behälterträgerabschnitt 8.2 und einen dritten Behälterträgerabschnitt 8.3 auf. Insgesamt ist der Behälterträger 8 im gezeigten Ausführungsbeispiel U-förmig ausgebildet, wobei die ersten und dritten Behälterträgerabschnitte 8.1, 8.3 parallel oder im Wesentlichen parallel zur Maschinenachse MA verlaufen und der zweite Behälterträgerabschnitt 8.2 den ersten mit dem dritten Behälterträgerabschnitt 8.1, 8.3 verbindet. Am ersten Behälterträgerabschnitt 8.1 ist hierbei der Behälterteller 8.4 ausgebildet, der eine Aufstellfläche für den zu behandelnden Behälter 3 bildet. Der dritte Behälterträgerabschnitt 8.3 ist das Führungselement 9 umfangsseitig umschließend, insbesondere formflüssig umschließend ausgebildet, so dass durch diesen dritten Behälterträgerabschnitt 8.3 die Führung des Behälterträgers 8 am Führungselement 9 bewirkt wird. In anderen Worten, weist der dritte Behälterträgerabschnitt 8.3 eine Öffnung auf, die an den Querschnittsform und die Querschnittsdimensionierung des Führungselements 9 angepasst ist, so dass das Führungselement 9 abschnittsweise in dem dritten Behälterträgerabschnitt 8.3 aufgenommen ist und dadurch der Behälterträger 8 am Führungselement 9 gleitend geführt ist.

Zur Verhinderung einer Verdrehung des Behälterträgers 8 um die Mittellängsachse des Führungselements 9 bei feststehendem Führungselement 9, kann eine Verdrehsicherung vorgesehen sein. Dies ist insbesondere dann der Fall, wenn das Führungselement 9 einen kreisrunden Querschnitt aufweist.

Zur Bewirkung einer Hubbewegung des Behälterträgers 8 in vertikaler Richtung, d.h. parallel zur Maschinenachse MA sind am Behälterträger 8 und am Führungselement 9 miteinander korrespondierende Mittel zur Ausbildung eines Linearantriebs vorgesehen. Insbesondere bildet der Behälterträger 8 bzw. der dritte Behälterträgerabschnitt 8.3 des Behälterträgers 8 den Läufer eines Linearantriebs und das Führungselement 9 den dazugehörigen Stator. Mehr im Detail sind im Inneren des Führungselements 9 eine Vielzahl von Magneten 10, insbesondere Permanentmagneten vorgesehen. Diese beispielsweise stapelartig in vertikaler Richtung aufeinander angeordneten Magneten 10 sind derart in das Führungselement 9 eingebracht, dass das Magnetfeld jeweils übereinander angeordneter Magneten 10 in entgegengesetzte Richtung weist. So weist beispielsweise der Nordpol eines ersten Magneten 10 in eine erste Raumrichtung und der Nordpol eines darüber bzw. darunter liegenden Magneten 10 in eine zur ersten Richtung entgegengesetzte Richtung. Zur Einbringung der Magneten 10 in das Führungselement 9 kann beispielsweise unterseitig am Führungselement 9 eine Öffnung vorgesehen sein, über die die Magneten 10 in vorgeschriebener Ausrichtung in den Hohlraum des Führungselements 9 einbringbar sind. Die Öffnung kann beispielsweise durch einen Schnellverschluss oder andere Verschließmittel verschließbar sein. Das Führungselement 9 kann insbesondere aus einem wasser- und säurebeständigen, harten Werkstoff mit guten Gleiteigenschaften, beispielsweise einem Edelstahl gebildet werden.

Der als Läufer ausgebildete dritte Behälterträgerabschnitt 8.3 weist vorzugsweise eine Vielzahl von elektrischen Spulen 11 auf, die derart von einem Wechselstrom durchfließbar sind, dass das dadurch elektrisch erzeugte Magnetfeld mit dem von den Magneten 10 bereitgestellten Magnetfeld derart zusammenwirkt, dass sich eine Hubbewegung bzw. eine Absenkbewegung an der Hubeinrichtung 7 ergibt. Die Spulen 11 sind hierbei vorzugsweise derart ausgebildet, dass sie ein in einer Querrichtung, d.h. einer Ausrichtung quer zur Maschinenachse MA verlaufendes Magnetfeld erzeugen. Durch eine abwechselnde Anschaltung der Spulen 11 lässt sich damit eine Hubbewegung bzw. eine Absenkbewegung des Behälterträgers 8 erreichen.

Vorzugsweise sind die Spulen 11 in den dritten Behälterträgerabschnitt 8.3 durch Eingießen in einen Kunststoff integriert. Insbesondere bildet dieser Kunststoff auch eine Gleitfläche gegenüber dem Führungselement 9 aus, so dass eine hohe Gleitfähigkeit des Behälterträgers 8 gegenüber dem Führungselement 9 erreicht wird. Des Weiteren wird durch das Eingießen der elektrischen Spulen 11 in den Kunststoff ein Schutz dieser Komponenten vor Schmutz bzw. Feuchtigkeit erreicht.

Die Spulen 11 der Hubeinrichtung 7 sind über eine elektrische Anschlussstelle 12, die beispielsweise eine elektrische Steck- oder Schraubverbindung o.ä. sein kann, mit einer Steuereinrichtung 13 verbunden, mittels der die gesteuerte Hubbewegung der Hubeinrichtung 7 erreicht wird. Die Steuereinrichtung 13 weist insbesondere einen Wechselrichter für die elektrische Ansteuerung der Spulen 11 sowie Mittel zur Überwachung der Hubbewegung der Hubeinrichtung 7 auf. Hierbei kann für jede Behandlungsstation 2a bzw. die dort vorgesehene Hubeinrichtung 7 eine getrennte Steuereinrichtung 13 vorgesehen sein. Alternativ kann auch für sämtliche Behandlungsstationen 2a bzw. die dort vorgesehenen Hubeinrichtungen 7 eine gemeinsame Steuereinrichtung 13 vorgesehen sein, die die Hubbewegung der jeweiligen Hubeinrichtungen 7 steuert. Diese zumindest eine Steuereinrichtung 13 kann mit einer übergeordneten Steuereinrichtung 14 verbunden sein, die beispielsweise die gesamte Behälterbehandlungsmaschine 1 steuert, um damit eine Synchronisation der Bewegung der einzelnen Hubeinrichtungen 7 mit der übrigen Funktionalität der Behälterbehandlungsmaschine 1 zu erreichen. Beispielsweise ist es durch die Kopplung der Steuereinrichtung 13 mit der Steuereinrichtung 14 möglich, dass die Hubbewegungen der Hubeinrichtungen 7 unmittelbar nach der Behälterübergabe von dem ersten Transferstern 4 an die jeweilige Behandlungsstation 2a bzw. unmittelbar vor der Behälterübergabe von der jeweiligen Behandlungsstation 2a an den zweiten Transferstern 5 erfolgen. Dadurch lässt sich eine Maximierung der verfügbaren Zeit zur Behälterbehandlung erreichen, d.h. der Verlustwinkel für die Behälterbehandlung kann somit minimiert werden.

Vorzugsweise ist an der jeweiligen Hubeinrichtung 7 zumindest ein Magnetfeldsensor vorgesehen, mittels dem die Position des Behälterträgers 8 relativ zum Führungselement 9 bestimmbar ist. Diese Positionsbestimmung erfolgt vorzugsweise berührungslos. Vorzugsweise ist der zumindest eine Magnetfeldsensor im Bereich des dritten Behälterträgerabschnitts 8.3 vorgesehen. Weiterhin vorzugsweise ist der zumindest eine Magnetfeldsensor zusammen mit den Spulen 11 in Kunststoff eingegossen, so dass der zumindest eine Magnetfeldsensor gegenüber Feuchtigkeit und Schmutz geschützt ist. Die von dem Magnetfeldsensor erzeugten Messwerte werden vorzugsweise an die Steuereinrichtung 13 bzw. die übergeordnete Steuereinrichtung 14 zur Auswertung weitergeleitet.

Des Weiteren kann an der jeweiligen Hubeinrichtung 7 zumindest ein Temperatursensor vorgesehen sein, mittels dem die Temperatur im Bereich der Spulen 11 überwacht wird. Vorzugsweise ist der zumindest eine Temperatursensor im Bereich des dritten Behälterträgerabschnitts 8.3 vorgesehen. Besonders bevorzugt ist der zumindest eine Temperatursensor zusammen mit den Spulen 11 in Kunststoff eingegossen. Die von dem Temperatursensor bereitgestellten Messwerte werden vorzugsweise an die Steuereinrichtung 13 bzw. die übergeordnete Steuereinrichtung 14 zur Auswertung weitergeleitet.

Vorzugsweise ist die Behälterbehandlungsmaschine 1 zur Überwachung eines Bruchs eines Behälters 3 während der Behälterbehandlung ausgebildet. Ein derartiger Behälterbruch kann beispielsweise beim Andrücken des Behälters 3 an das Füllelement 6 erfolgen. Bei einem Brechen des Behälters 3 ändert sich die auf den Behälterträger 8 wirkende Schwerkraft sprungartig, wobei diese sprungartige Änderung der Belastung des Behälterträgers 8 durch den Magnetfeldsensor erfassbar ist. Die Behälterbehandlungsmaschine kann dabei insbesondere derart ausgebildet sein, dass bei einem Flaschenbruch der Behälterträger 8 nicht unkontrolliert nach oben bewegt wird, sondern kontrolliert in seine Ausgangsstellung zurückfährt, so dass ein Entfernen des gebrochenen Behälters 3 möglich ist.

Des Weiteren ist es mittels den von dem Magnetfeldsensor bereitgestellten Messdaten möglich, den Anpressdruck des Behälters 3 an das Füllelement 6 zu steuern.

In einem weiteren Ausführungsbeispiel ist die Behälterbehandlungsmaschine 1 zum Bestimmen der Füllmenge des Behälters 3, der an der jeweiligen Behandlungsstation 2a aufgenommen ist, ausgebildet. Hierbei werden ebenfalls die von dem Magnetfeldsensor bereitgestellten Daten ausgewertet und zur Bestimmung der Füllmenge im jeweiligen Behälter 3 herangezogen. Beim Befüllen des Behälters 3 mit einem flüssigen Füllgut erhöht sich abhängig vom Füllstand im Behälter 3 kontinuierlich dessen Masse, so dass die schwerkraftbedingte Belastung der Hubeinrichtung 7 ansteigt. Um den Behälter 3 in einer definierten Position am Füllelement 6 bzw. mit einem definierten Anpressdruck gegenüber dem Füllelement 6 zu halten, ist es damit nötig, dass das Magnetfeld in Abhängigkeit der auf die Hubeinrichtung 7 wirkenden Schwerkraft geändert bzw. erhöht wird. Bevorzugt wird der von dem Magnetfeldsensor bereitgestellte Messwert mit einem Sollwertmesswert verglichen. Für den Fall, dass der vom Magnetfeldsensor bereitgestellte Messwert diesen Sollmesswert erreicht oder übersteigt, wird der Füllprozess unterbrochen, da in den Behälter 3 die gewünschte Menge an Füllgut abgefüllt ist. Somit kann durch den Magnetfeldsensor eine berührungslose Füllstandsmessung erreicht werden, so dass auf Durchflussmesser oder andere Mittel zur Bestimmung des Füllstands im Behälter 3 verzichtet werden kann, die in der Regel mit dem abzufüllenden Produkt in Berührung stehen und damit eine potentielle Kontaminierung des Füllgutes hervorrufen können.

Die Erfindung wurde voranstehend an Ausführungsbeispielen beschrieben. Es versteht sich, dass eine Vielzahl von Änderungen oder Abwandlungen möglich sind, ohne dass dadurch der von den Ansprüchen definierten Schutzumfang der Erfindung verlassen wird.

### Bezugszeichenliste

- 1: Behälterbehandlungsmaschine
- 2: Transportelement
- 2a: Behandlungsstation
- 2b: Behandlungstisch
- 3: Behälter
- 4: erster Transferstern
- 5: zweiter Transferstern
- 6: Füllelement
- 7: Hubeinrichtung
- 8: Behälterträger
- 8.1: erster Behälterträgerabschnitt
- 8.2: zweiter Behälterträgerabschnitt
- 8.3: dritter Behälterträgerabschnitt
- 8.4: Behälterteller
- 9: Führungselement
- 10: Magnet
- 11: Spulen
- 12: Anschlussstelle
- 13: Steuereinrichtung
- 14: Steuereinrichtung
- MA: Maschinenachse

## Patentansprüche

1. Behälterbehandlungsmaschine zur Behandlung von Behältern (3), mit einem umlaufend angetriebenen Transportelement (2), an dem eine Vielzahl von Behandlungsstationen (2a) vorgesehen sind, wobei die Behandlungsstationen (2a) jeweils eine Hubeinrichtung (7) zum Anheben und Absenken der Behälter (3) aufweisen, wobei die Hubeinrichtung (7) zumindest einen Behälterträger (8) und ein Führungselement (9) umfasst und wobei der Behälterträger (8) an dem Führungselement (9) geführt ist, **dadurch gekennzeichnet, dass** im Inneren des Führungselements (9) ein Aufnahmeraum ausgebildet ist, dass im Aufnahmeraum mehrere Magnete (10) aufgenommen sind und dass der Behälterträger (8) elektrische Spulen (11) aufweist, die zusammen mit den Magneten (10) im Führungselement (9) einen Linearantrieb zum Anheben und Absenken des Behälterträgers (8) bilden.

2. Behälterbehandlungsmaschine nach Anspruch 1, **dadurch gekennzeichnet, dass** der Behälterträger (8) einen Führungsabschnitt (8.3) aufweist, der zur Bewirkung einer axialen Führung des Behälterträgers (8) am Führungselement (9) das Führungselement (9) zumindest abschnittsweise umgibt.

3. Behälterbehandlungsmaschine nach Anspruch 1 oder 2, **dadurch gekennzeichnet, dass** das Führungselement (9) feststehend am Transportelement (2) angeordnet ist.

4. Behälterbehandlungsmaschine nach einem der vorhergehenden Ansprüche, **dadurch gekennzeichnet, dass** das Führungselement (9) einen runden oder polygonförmigen Querschnitt aufweist oder als Zahnwelle ausgebildet ist.

5. Behälterbehandlungsmaschine nach einem der vorhergehenden Ansprüche, **dadurch gekennzeichnet, dass** am Behälterträger (8) eine Verdrehsicherung zur Verhinderung des Verdrehens des Behälterträgers (8) relativ zum Führungselement (9) vorgesehen ist.

6. Behälterbehandlungsmaschine nach einem der vorhergehenden Ansprüche 2 bis 5, **dadurch gekennzeichnet, dass** am Führungsabschnitt (8.3) des Behälterträgers (8) die elektrischen Spulen (11) vorgesehen sind.

7. Behälterbehandlungsmaschine nach einem der vorhergehenden Ansprüche 2 bis 6, **dadurch gekennzeichnet, dass** am Führungsabschnitt (8.3) des Behälterträgers (8) zumindest ein Magnetfeldsensor und/oder ein Temperatursensor vorgesehen ist.

8. Behälterbehandlungsmaschine nach einem der vorhergehenden Ansprüche 2 bis 7, **dadurch gekennzeichnet, dass** der Führungsabschnitt (8.3) des Behälterträgers (8) eine Kunststoffschicht aufweist, die das Führungselement (9) umfangsseitig umgibt und eine Gleitschicht gegenüber dem Führungselement (9) bildet.

9. Behälterbehandlungsmaschine nach Anspruch 8, **dadurch gekennzeichnet, dass** die Kunststoffschicht die elektrischen Spulen (11) und/oder den Magnetfeldsensor und/oder den Temperatursensor umschließt, insbesondere vollständigumschließt.

10. Behälterbehandlungsmaschine nach einem der vorhergehenden Ansprüche, **dadurch gekennzeichnet, dass** eine elektrische Steuereinrichtung (13) vorgesehen ist, die zur Beaufschlagung der elektrischen Spulen (11) mit elektrischem Strom derart ausgebildet ist, dass eine Hubbewegung des Behälterträgers (8) erreicht wird.

11. Behälterbehandlungsmaschine nach einem der vorhergehenden Ansprüche 7 bis 10, **dadurch gekennzeichnet, dass** der Magnetfeldsensor mit einer Steuereinrichtung (13) zur Positionserfassung und Positionskorrektur des Behälterträgers verbunden ist.

12. Behälterbehandlungsmaschine nach einem der vorhergehenden Ansprüche 7 bis 11, **dadurch gekennzeichnet, dass** eine mit dem Magnetfeldsensor gekoppelte Steuereinrichtung (13) zur Erfassung des Anpressdrucks des Behälters an die Behandlungsstation vorgesehen ist.

13. Behälterbehandlungsmaschine nach einem der vorhergehenden Ansprüche 7 bis 12, **dadurch gekennzeichnet, dass** eine mit dem Magnetfeldsensor gekoppelte Steuereinrichtung (13) zur Erfassung von sprunghaften Belastungsänderungen des Behälterträgers (8) vorgesehen ist.

14. Behälterbehandlungsmaschine nach einem der vorhergehenden Ansprüche 7 bis 13, **dadurch gekennzeichnet, dass** eine mit dem Magnetfeldsensor gekoppelte Steuereinrichtung (13) vorgesehen ist, wobei die Steuereinrichtung (13) zur Ermittlung der Masse des Behälters (3) während der Behälterbehandlung ausgebildet ist.

15. Behälterbehandlungsmaschine nach einem der vorhergehenden Ansprüche 7 bis 14, **dadurch gekennzeichnet, dass** der Temperatursensor mit einer Steuereinrichtung (13) zur Erfassung der Temperatur der elektrischen Spulen (11) verbunden ist.

16. Verfahren zum Behandeln von Behältern (3) mittels einer Behälterbehandlungsmaschine (1), die ein umlaufend angetriebenes Transportelement (2) aufweist, an dem eine Vielzahl von Behandlungsstationen (2a) vorgesehen sind, wobei die Behälter (3) an den Behandlungsstationen (2a) mittels einer Hubeinrichtung (7) angehoben und/oder abgesenkt werden und wobei die Hubeinrichtung (7) zumindest einen Behälterträger (8) und ein Führungselement (9) umfasst, an dem der Behälterträger (8) geführt wird, **dadurch gekennzeichnet, dass** im Inneren des Führungselements (9) ein Aufnahmeraum ausgebildet ist, dass im Aufnahmeraum mehrere Magnete (10) aufgenommen sind und dass der Behälterträger (8) elektrische Spulen aufweist, mittels denen der Behälterträger (8) im Zusammenwirken mit den Magneten (10) im Führungselement (9) angehoben bzw. abgesenkt wird.

## Claims

1. Container processing machine for processing containers (3), with a driven revolving transport element (2) on which a plurality of processing stations (2a) are provided, wherein the processing stations (2a) each have a lifting device (7) for raising and lowering the containers (3), wherein the lifting device (7) comprises at least one container carrier (8) and a guiding element (9), and wherein the container carrier (8) is guided at the guiding element (9), **characterised in that** an accommodating space is formed in the interior of the guiding element (9), wherein a plurality of magnets (10) are accommodated in the accommodating space, and that the container carrier (8) comprises electrical coils (11), which, together with the magnets (10) in the guiding element (9) form a linear drive for raising and lowering the container carrier (8).

2. Container processing machine according to claim 1, **characterised in that** the container carrier (8) comprises a guiding section (8.3) that surrounds the guiding element (9) at least in sections in order to cause an axial guiding of the container carrier (8) on the guiding element (9).

3. Container processing machine according to claim 1 or 2, **characterised in that** the guiding element (9) is securely arranged on the transport element (2).

4. Container processing machine according to any one of the preceding claims, **characterised in that** the guiding element (9) has a circular or polygonal cross-section or is configured as a toothed shaft.

5. Container processing machine according to any one of the preceding claims, **characterised in that** a rotation securing element is provided on the container carrier (8) in order to prevent the rotation of the container carrier (8) relative to the guiding element (9).

6. Container processing machine according to any one of the preceding claims 2 to 5, **characterised in that** the electric coils (11) are provided on the guiding section (8.3) of the container carrier (8).

7. Container processing machine according to any one of the preceding claims 2 to 6, **characterised in that** at least one magnetic field sensor and/or a temperature sensor is provided on the guiding section (8.3) of the container carrier (8).

8. Container processing machine according to any one of the preceding claims 2 to 7, **characterised in that** the guiding section (8.3) of the container carrier (8) comprises a plastic layer, which surrounds the guiding element (9) on the circumference and forms a slide layer in relation to the guiding element (9).

9. Container processing machine according to claim 8, **characterised in that** the plastic layer surrounds the electrical coils (11) and/or the magnetic field sensor and/or the temperature sensor, in particular surrounding them completely.

10. Container processing machine according to any one of the preceding claims, **characterised in that** an electrical control device (13) is provided, which is configured such as to impose electrical current on the electrical coils (11) in such a way that a lifting movement of the container carrier (8) is achieved.

11. Container processing machine according to any one of the preceding claims 7 to 10, **characterised in that** the magnetic field sensor is connected to a control device (13) in order to detect the position and correct the position of the container carrier.

12. Container processing machine according to any one of the preceding claims 7 to 11, **characterised in that** a control device (13) is provided, coupled to the magnetic field sensor, in order to detect the contact pressure of the container on the processing station.

13. Container processing machine according to any one of the preceding claims 7 to 12, **characterised in that** a control device (13) coupled to the magnetic field sensor is provided for detecting sudden load changes of the container carrier (8).

14. Container processing machine according to any one of the preceding claims 7 to 13, **characterised in that** a control device (13) coupled to the magnetic field sensor is provided, wherein the control device (13) is configured for determining the mass of the container (3) during the container processing.

15. Container processing machine according to any one of the preceding claims 7 to 14, **characterised in that** the temperature sensor is connected to a control device (13) for detecting the temperature of the electrical coils (11).

16. Method for processing containers (3) by means of a container processing machine (1), which comprises a driven revolving transport element (2) with a plurality of processing stations (2a), wherein the containers (3) are raised and/or lowered in the processing stations (2a) by means of a lifting device (7), and wherein the lifting device (7) comprises at least one container carrier (8) and a guiding element (9), in which the container carrier (8) is guided, **characterised in that** an accommodation space is formed in the interior of the guiding element (9), wherein a plurality of magnets (10) are accommodated in the accommodation space, and the container carrier (8) comprises electrical coils, by means of which the container carrier (8) is raised and/or lowered respectively in interaction with the magnets (10) on the guiding element (9).

## Revendications

1. Machine de traitement de contenants pour traiter des contenants (3), avec un élément de transport (2) entraîné en rotation, sur lequel sont prévus une pluralité de postes de traitement (2a), dans laquelle les postes de traitement (2a) présentent respectivement un dispositif de levage (7) pour relever et abaisser les contenants (3), dans lequel le dispositif de levage (7) comprend au moins un support de contenant (8) et un élément de guidage (9) et dans lequel le support de contenant (8) est guidé sur l'élément de guidage (9), **caractérisée en ce qu'**un espace de logement est réalisé à l'intérieur de l'élément de guidage (9), que plusieurs aimants (10) sont logés dans l'espace de logement, et que le support de contenant (8) présente des bobines (11) électriques qui forment, conjointement avec les aimants (10), dans l'élément de guidage (9), un entraînement linéaire pour lever et abaisser le support de contenant (8).

2. Machine de traitement de contenants selon la revendication 1, **caractérisée en ce que** le support de contenant (8) présente une section de guidage (8.3), qui entoure au moins par endroits l'élément de guidage (9) pour entraîner un guidage axial du support de contenant (8) sur l'élément de guidage (9).

3. Machine de traitement de contenants selon la revendication 1 ou 2, **caractérisée en ce que** l'élément de guidage (9) est disposé de manière immobile sur l'élément de transport (2).

4. Machine de traitement de contenants selon l'une quelconque des revendications précédentes, **caractérisée en ce que** l'élément de guidage (9) présente une section transversale ronde ou polygonale ou est réalisé en tant qu'arbre denté.

5. Machine de traitement de contenants selon l'une quelconque des revendications précédentes, **caractérisée en ce qu'**un système anti-rotation est prévu sur le support de contenant (8) pour empêcher la rotation du support de contenant (8) par rapport à l'élément de guidage (9).

6. Machine de traitement de contenants selon l'une quelconque des revendications 2 à 5, **caractérisée en ce que** les bobines (11) électriques sont prévues sur la section de guidage (8.3) du support de contenant (8).

7. Machine de traitement de contenants selon l'une quelconque des revendications 2 à 6, **caractérisée en ce qu'**au moins un capteur de champ magnétique et/ou un capteur de température sont prévus sur la section de guidage (8.3) du support de contenant (8).

8. Machine de traitement de contenants selon l'une quelconque des revendications précédentes 2 à 7, **caractérisée en ce que** la section de guidage (8.3) du support de contenant (8) présente une couche en matière plastique, qui entoure côté périphérique l'élément de guidage (9) et forme une couche de glissement par rapport à l'élément de guidage (9).

9. Machine de traitement de contenants selon la revendication 8, **caractérisée en ce que** la couche en matière plastique entoure les bobines (11) électriques et/ou le capteur de champ magnétique et/ou le capteur de température, en particulier les entoure en totalité.

10. Machine de traitement de contenants selon l'une quelconque des revendications précédentes, **caractérisée en ce qu'**un dispositif de commande (13) électrique est prévu, qui est réalisé pour soumettre les bobines (11) électriques à l'action d'un courant électrique de telle manière qu'un déplacement de levage du support de contenant (8) est atteint.

11. Machine de traitement de contenants selon l'une quelconque des revendications 7 à 10, **caractérisée en ce que** le capteur de champ magnétique est relié à un dispositif de commande (13) pour la détection de position et la correction de position du support de contenant.

12. Machine de traitement de contenants selon l'une quelconque des revendications précédentes 7 à 11, **caractérisée en ce qu'**un dispositif de commande (13) couplé au capteur de champ magnétique est prévu pour détecter la pression de compression du contenant sur le poste de traitement.

13. Machine de traitement de contenants selon l'une quelconque des revendications précédentes 7 à 12, **caractérisée en ce qu'**un dispositif de commande (13) couplé au capteur de champ magnétique est prévu pour détecter des modifications de contrainte brutales du support de contenant (8).

14. Machine de traitement de contenants selon l'une quelconque des revendications précédentes 7 à 13, **caractérisée en ce qu'**un dispositif de commande (13) couplé au capteur de champ magnétique est prévu, dans lequel le dispositif de commande (13) est réalisé pour déterminer la masse du contenant (3) pendant le traitement de contenant.

15. Machine de traitement de contenants selon l'une quelconque des revendications 7 à 14, **caractérisée en ce que** le capteur de température est relié à un dispositif de commande (13) pour détecter la température des bobines (11) électriques.

16. Procédé de traitement de contenants (3) au moyen d'une machine de traitement de contenant (1), qui présente un élément de transport (2) entraîné en rotation, sur lequel une pluralité de postes de traitement (2a) sont prévus, dans lequel les contenants (3) sur les postes de traitement (2a) sont relevés et/ou abaissés au moyen d'un dispositif de levage (7), et dans lequel le dispositif de levage (7) comprend au moins un support de contenant (8) et un élément de guidage (9), sur lequel le support de contenant (8) est guidé, **caractérisé en ce qu'**un espace de logement est réalisé à l'intérieur de l'élément de guidage (9), que plusieurs aimants (10) sont logés dans l'espace de logement, et que le support de contenant (8) présente des bobines électriques, au moyen desquelles le support de contenant (8) est relevé ou abaissé en coopération avec les aimants (10) dans l'élément de guidage (9).
